# EUROPÄISCHE PATENTSCHRIFT

(11) **EP 1 319 259 B1**
(45) Veröffentlichungstag und Bekanntmachung des Hinweises auf die Patenterteilung: **17.03.2004**
(21) Anmeldenummer: 01971696.8
(22) Anmeldetag: 07.09.2001
(51) Int. Cl.: H01M 8/04, H01M 8/10, F28F 21/00, F28F 21/06

(54) **VORRICHTUNG UND VERFAHREN ZUR ERZEUGUNG UND SIMULATION VON ZWEIPHASENSTRÖMUNGEN IN CHEMISCHEN ODER ELEKTROCHEMISCHEN REAKTOREN, ODER WÄRMETAUSCHERN**
DEVICE AND METHOD FOR PRODUCING AND SIMULATING TWO-PHASE FLOWS IN CHEMICAL AND ELECTROCHEMICAL REACTORS, OR IN HEAT EXCHANGERS
DISPOSITIF ET PROCEDE POUR GENERER ET SIMULER DES ECOULEMENTS A DEUX PHASES DANS DES REACTEURS CHIMIQUES OU ELECTROCHIMIQUES, OU DES ECHANGEURS DE CHALEUR

(30) Priorität: 08.09.2000 DE 10044571
(43) Veröffentlichungstag der Anmeldung: 18.06.2003
(73) Patentinhaber: Forschungszentrum Jülich GmbH, 52425 Jülich (DE)
(72) Erfinder: DOHLE, Hendrik, 5224 Stolberg-Mausbach (DE); BEWER, Thomas, 52068 Aachen (DE)
(86) Internationale Anmeldenummer: PCT/DE2001/003432
(87) Internationale Veröffentlichungsnummer: WO 2002/021622

(56) Entgegenhaltungen:
- US-A- 4 021 323
- US-A- 4 176 655
- US-A- 4 602 987

## Beschreibung

Die Erfindung betrifft eine Vorrichtung und ein Verfahren zur Erzeugung und Simulation von Zweiphasenströmungen in chemischen oder elektrochemischen Reaktoren, insbesondere Brennstoffzellen und Wärmetauschern.

Chemische und elektrochemische Reaktoren dienen dazu, Reaktionsedukte einer Reaktionszone zuzuführen, chemische oder elektrochemische Reaktionen durchzuführen und Reaktionsprodukte aus der Reaktionszone abzuleiten. Energie kann dabei zugeführt oder auch freigesetzt werden. Als Energiearten können sowohl thermische Energie als auch elektrische Energie zum Einsatz kommen. Dies trifft insbesondere auch auf Brennstoffzellen und Wärmetauschern zu. Dort können mehrphasige Bereiche auftreten, die zum Funktionsverlust führen können.

Im Falle einer Brennstoffzelle wird elektrische Energie direkt aus einem Brennstoff und einem Oxidationsmittel gewonnen. Sie besteht aus einer Kathode, einer Anode und einem dazwischen liegenden Elektrolyten. Der Kathode wird das Oxidationsmittel (z. B. Luft) und der Anode wird der Brennstoff (z. B. Methanol) zugeführt. Kathode und Anode der Brennstoffzelle weisen in der Regel eine durchgehende Porosität auf, damit die beiden Betriebsmittel (Brennstoff und Oxidationsmittel) dem Elektrolyten zugeführt und die Reaktionsprodukte abgeführt werden können. Kohlendioxid ist ein typisches Reaktionsprodukt auf der Anodenseite.

Mehrere Brennstoffzellen werden in der Regel zur Erzielung großer elektrischer Leistungen durch verbindende Elemente, sogenannte Interkonnektoren, elektrisch und mechanisch verbunden. Ein Beispiel für ein verbindendes Element stellt die bipolare Platte dar. Mittels Interkonnektoren entstehen übereinander gestapelte, elektrisch in Serie geschaltete Brennstoffzellen. Diese Anordnung wird Brennstoffzellenstapel genannt. Die Brennstoffzellenstapel bestehen aus den Interkonnektoren und den Elektroden-Elektrolyt-Einheiten.

Interkonnektoren besitzen neben den elektrischen und mechanischen Eigenschaften regelmäßig auch Verteilerstrukturen für die Betriebsmittel. Bei der bipolaren Platte sind dies Stege mit Elektrodenkontakt, die Kanäle zur Versorgung der Elektroden mit Betriebsmitteln voneinander trennen (DE 44 10 711 C1). Verteilerstrukturen wie Manifolds, Kanäle in bipolaren Platten, Löcher in Kontaktblechen, Mäander oder Füßchen eines Netzes (grid) bewirken, daß die Betriebsmittel gleichmäßig in den Elektrodenräumen (Räume in denen sich die Elektroden befinden) verteilt werden.

In einer sogenannten "Direkt-Methanol-Brennstoffzelle" (DMFC) wird Methanol zusammen mit Wasser über solche Verteilerstrukturen an der Anode verteilt und mit Hilfe von Katalysatoren, wie beispielweise Platin-Ruthenium-Legierungen, zu Protonen und Kohlendioxid umgesetzt. Eine Zweiphasenströmung bildet sich aus, in der CO₂ in einer Flüssigkeit auftritt. Der Transport von flüssigen und gasförmigen Stoffen in einem porösen System verläuft sehr unterschiedlich. Liegen eine flüssige und eine gasförmige Phase nebeneinander vor, so wird im wesentlichen nur ein Gastransport durch die Poren stattfinden, die nicht mit Flüssigkeit benetzt sind. Die mit Flüssigkeit gefüllten Poren können im allgemeinen nicht passiert werden.

Nachteilig tritt bei dem Betrieb einer DMFC mit flüssigem Brennstoff (Methanol-Wasser-Gemisch) mit Kohlendioxid eine zweite gasförmige Phase auf. Das in unmittelbarer Nähe des Elektrolyten gebildete Kohlendioxid muß über die Poren der Anode den Bereich der Reaktion verlassen. Es behindert ansonsten den gleichmäßigen Zustrom des flüssigen Brennstoffs zum Elektrolyten.

Aus den genannten Gründen muß das entstehende Kohlendioxid als gasförmiges Reaktionsprodukt im Betrieb einer Brennstoffzelle aus dem Anodenraum abgeleitet werden, da sich ansonsten die Gasbläschen unter anderem an den Verteilerstrukturen, also beispielsweise an den Kanälen von bipolaren Platten, festsetzen können und dadurch ein Leistungsabfall der Brennstoffzelle erfolgt.

In Wärmetauschern kann in ähnlicher Weise die Zweiphasenströmung in Form von Blasenbildung durch Wasserverdampfung auftreten. Problematisch ist dabei, daß durch die Blasenbildung eine Blockade des Wärmeübergangs erfolgt, der zu Einbußen im Wirkungsgrad des Wärmetauschers führen kann.

Die Erzeugung von Zweiphasenströmungen, deren Sichtbarmachung und Simulation, wie sie in Brennstoffzellen, Wärmetauschern oder anderen chemischen Reaktoren auftritt, ist daher von großem Interesse. Die Zweiphasenströmung auslösenden Mittel, z.B. Verteilerstrukturen und Katalysatoren, werden dazu eingesetzt, die Gasentwicklung und Strömung des Gases in der Flüssigkeit zu beeinflussen.

Die genaue Kenntnis der Strömungsvorgänge im Inneren von Brennstoffzellen, Wärmetauschern oder anderer Reaktoren, wie Elektrolyseure und Akkumulatoren ist also erforderlich. Diese sind aber aufgrund zusätzlicher stromableitender Strukturen und auf Grund der Werkstoffe in der Regel geschlossene Systeme und daher optisch unzugänglich. Eine exakte Kenntnis der Strömungsvorgänge im Betrieb ist nicht gegeben.

Aufgabe der Erfindung ist die Bereitstellung einer Vorrichtung mit Mitteln zur Erzeugung und Simulation von Zweiphasenströmungen. Als Voraussetzung zur Untersuchung ist die Sichtbarmachung der Zweiphasenströmung unabdingbar.

Die Aufgabe wird durch eine Vorrichtung mit den Merkmalen des Hauptanspruchs gelöst. Vorteilhafte Ausgestaltungen ergeben sich aus den rückbezogenen Ansprüchen.

Die Vorrichtung umfaßt Mittel zur Erzeugung der Zweiphasenströmungen und ist zumindest teilweise durchsichtig. Dadurch wird ein Einblick in ihr Inneres gewährleistet. Zweiphasenströmungen, z.B. die durch Gasblasenbildung hervorgerufene Strömungsänderung in bzw. von Flüssigkeiten, werden sichtbar. Die Vorrichtung selbst kann eine mehr oder weniger realitätsnahe Nachbildung eines chemischen oder elektrochemischen Reaktors oder eines anderen, eine Zweiphasenströmung aufweisenden, Gegenstandes sein. Sie umfaßt die zur Erzeugung von Zweiphasenströmungen verantwortlichen und daher zu testenden Mittel.

Vorteilhaft ist die Vorrichtung modular aufgebaut. Dadurch ist man im Aufbau äußerst flexibel. Einzelteile der Vorrichtung können leicht ersetzt und weiter entwickelt werden.

Die Vorrichtung kann zumindest teilweise aus Plexiglas bestehen. Plexiglas ist preiswert. Es ist einfach zu bearbeiten. Realitätsnahe Strukturen, wie sie in den zu simulierenden Reaktoren auftreten, können leicht ausgebildet werden.

Weiter umfaßt die Vorrichtung als Mittel zur Erzeugung von Zweiphasenströmungen Verteilerstrukturen zur Zu- und Ableitung sowie zur Verteilung von Flüssigkeiten und Gasen. Die Verteilerstrukturen der Vorrichtung können z.B. in Form von Manifolds oder Kanälen, wie in einer realen Brennstoffzelle, ausgebildet sein. Die Vorrichtung stellt dann diesbezüglich eine Brennstoffzellennachbildung dar. In ihr lassen sich Zweiphasenströmungen erzeugen und das Strömungsverhalten innerhalb einer Brennstoffzelle simulieren. Die Vorrichtung umfaßt zumindest diejenigen zu testenden Mittel, die zur Erzeugung der Zweiphasenströmung beitragen können und die auf ihren Einfluß auf die Zweiphasenströmung auszutesten sind.

Ferner umfaßt eine solche Vorrichtung auch Katalysatoren. Durch die Katalysatoren kann unter Verwendung geeigneter, Gas freisetzender Lösungen Gas direkt an denjenigen Orten der Vorrichtung entwickelt werden, wie es auch im Betrieb einer realen Brennstoffzelle, z.B. einer DMFC, oder eines Wärmetauschers auftritt. Die Simulation der Zweiphasenströmung wird dadurch exakter.

Die Aufgabe wird ferner durch ein Verfahren zur Erzeugung und Simulation von Zweiphasenströmungen in chemischen oder elektrochemischen Reaktoren gelöst. Es umfaßt die Schritte:
- eine Gas freisetzende Lösung wird in eine zumindest teilweise durchsichtige Vorrichtung mit Mitteln zur Erzeugung von Zweiphasenströmungen gemäß einem der Ansprüche 1-5 geleitet,
- die Zweiphasenströmung wird erzeugt und aufgezeichnet.

Das Verfahren kann insbesondere für Brennstoffzellen, Brennstoffzellenstapel und Wärmetauscher angewendet werden.

Ohne Einschränkung der Erfindung kann das Verfahren aber auch zur Simulation von Zweiphasenströmungen in Elektrolyseuren, Akkumulatoren, Diaphragmazellen und Reaktoren zur elektrochemischen Abwasseraufbereitung angewendet werden. Die hierzu verwendete Vorrichtung ist eine mehr oder weniger vollständige Nachbildung der genannten Reaktoren. Sie umfaßt jene Mittel, die zur Erzeugung der Zweiphasenströmung beitragen können und die auf ihren Einfluß auf die Zweiphasenströmung auszutesten sind, z.B. Verteilerstrukturen und Katalysatoren.

Mit Aufzeichnung sind insbesondere visuelle Verfahren, wie der Einsatz von Video-Kameras gemeint. Ohne Einschränkung der Erfindung können jedoch andere Aufzeichnungsverfahren, z.B. Verfahren zur Registrierung von Druck- oder Volumenänderungen, angewendet werden.

Vorteilhaft wird verdünntes H₂O₂ als Gas freisetzende Lösung in den Reaktor geleitet. Es ist preiswert, farblos und wird durch Platin-Ruthenium als Katalysator leicht zu Sauerstoff und Wasser umgesetzt. Mit Sauerstoff als Reaktionsprodukt entsteht somit ein Gas, das unbedenklich an die Umgebung geführt werden kann. Der Sauerstoff entsteht an den gleichen Orten wie in einer real funktionierenden Brennstoffzelle, nämlich am Katalysator.

Besonders vorteilhaft verwendet man eine H₂O₂-Konzentration von 0,5-30 %, und insbesondere 2-5 %. Die H₂O₂-Konzentration führt dann zu einer Gasblasenbildung, die derjenigen von realen Verhältnissen in einer DMFC-Brennstoffzelle entspricht. Bei Verwendung von hohen H₂O₂-Konzentrationen kann die benötigte Katalysatormenge gering gehalten werden. Teures Edelmetall wird eingespart.

Als Ausführungsbeispiel sei die Erzeugung einer Zweiphasenströmung und dessen Simulation wie in einer DMFC-Brennstoffzelle genannt. Das Gehäuse der Vorrichtung besteht aus Plexiglas, was einen Einblick in das Innere gewährleistet. Die Vorrichtung enthält darüber hinaus eine Katalysatorschicht aus Platin-Ruthenium mit einer Belegung von 2 mg cm⁻² und Gasverteilerstrukturen in Form von Manifolds sowie Kanäle und Stege, wie in einer bipolaren Platte, mit einer Breite von je 2 mm. Als Gas freisetzende Lösung wird 3%-ige H₂O₂-Lösung verwendet. Die Gasblasenentwicklung entspricht dann einer derjenigen, die im Betrieb einer Direkt-Methanol-Brennstoffzelle mit einer Stromdichte von 100-500 mA cm⁻² auftritt. Es kann auch eine farbige Lösung, beispielsweise bestehend aus Lebensmittelfarbe E124, zugesetzt werden. Dadurch wird die Beobachtbarkeit des Strömungsverlaufs der flüssigen Phase verbessert. Die Strömung des Gases in der Flüssigkeit bzw. die Strömung der Flüssigkeit selbst läßt sich leicht mit einer Video-Kamera visuell aufzeichnen und im Detail untersuchen. Die Entwicklung von geeigneten Strukturen, z.B. Verteilerstrukturen, an denen ein Gas wie Kohlendioxid nicht agglomeriert, erleichtert somit die Ableitung des Gases.

Ein weiteres Ausführungsbeispiel der Vorrichtung nach einem der Ansprüche 1 bis 5 bezieht sich auf ein durchsichtiges Modell eines Wärmetauschers indem man die simulierte Zweiphasenströmung steuert und sichtbar macht, indem Bereiche mit einem hohen Wärmeeintrag mit Platin-Ruthenium mit einer Belegung von 2 mg cm⁻² als Katalysatormaterial beschichtet wird. Dies hat zur Folge, daß, bei Verwendung von 3%-iger H₂O₂ als Gas freisetzender Lösung, nur in diesen Bereichen Gasblasen entstehen. Wie im Falle einer Brennstoffzelle sind dann auf Grund der Simulation der Strömungsverhältnisse Erkenntnisse für die Entwicklung eines Wärmetauschers ableitbar, in dem durch geschickte Anordnung seiner Bauteile die Gasblasenentwicklung minimiert und damit der Wirkungsgrad gesteigert wird.

## Patentansprüche

1. Vorrichtung zur Simulation einer Zweiphasenströmung, wobei die Vorrichtung zumindest teilweise durchsichtig ist und zur Erzeugung der Zweiphasenströmung Verteilerstrukturen für Flüssigkeiten und Gasen umfaßt,
**gekennzeichnet durch**
mindestens einen Katalysator zur Erzeugung von Gas aus einer Gas freisetzenden Lösung.

2. Vorrichtung nach Anspruch 1,
**dadurch gekennzeichnet,**
**daß** sie zumindest teilweise aus Plexiglas besteht.

3. Vorrichtung nach einem der vorhergehenden Ansprüche,
**gekennzeichnet durch**
Verteilerstrukturen in Form von Manifolds sowie Kanälen und Stegen.

4. Vorrichtung nach einem der Ansprüche 1 oder 2,
**gekennzeichnet durch**
Verteilerstrukturen in Form von Mäandern oder Füßchen eines Netzwerkes oder Löchern in Kontaktblechen.

5. Vorrichtung nach einem der vorhergehenden Ansprüche,
**gekennzeichnet durch**
Platin-Ruthenium als Katalysator.

6. Wärmetauscher-Modell als Vorrichtung nach einem der Ansprüche 1 bis 5.

7. Brennstoffzelle- oder Brennstoffzellenstapel-Modell als Vorrichtung nach einem der Ansprüche 1 bis 5.

8. Verfahren zur Erzeugung und Simulation von Zweiphasenströmungen in einem elektrochemischen oder chemischen Reaktor,
**gekennzeichnet durch** die Schritte:
- eine Gas freisetzende Lösung wird in eine Vorrichtung nach einem der Ansprüche 1 bis 5 oder in ein Wärmetauscher-Modell nach Anspruch 6 oder in ein Brennstoffzellen- oder Brennstoffzellenstapel-Modell nach Anspruch 7 geleitet,
- die Zweiphasenströmung wird erzeugt und aufgezeichnet.

9. Verfahren nach Anspruch 8,
**gekennzeichnet durch** verdünntes H₂O₂ als Gas freisetzende Lösung.

10. Verfahren nach Anspruch 8 oder 9,
**gekennzeichnet durch**
eine H₂O₂-Konzentration von 0,5-30 %, und insbesondere 2-5 %.

## Revendications

1. Dispositif de simulation d'un écoulement à deux phases, le dispositif étant transparent au moins en partie et comprenant, pour la production de l'écoulement à deux phases, des structures formant répartiteur de liquides,
**caractérisé**
**par** au moins un catalyseur de production de gaz à partir d'une solution dégageant du gaz.

2. Dispositif suivant la revendication 1,
**caractérisé**
**en ce qu'**il est au moins en partie en plexiglas.

3. Dispositif suivant l'une des revendications précédentes
**caractérisé par** des structures formant répartiteur sous la forme de collecteur ainsi que de canaux et de parties pleines.

4. Dispositif suivant l'une des revendications 1 ou 2,
**caractérisé par** des structures formant répartiteur sous la forme de méandres ou de pieds d'un réseau ou de trous dans des tôles de contact.

5. Dispositif suivant l'une des revendications précédentes,
**caractérisé par** du platine-ruthénium comme catalyseur.

6. Modèle d'échangeur de chaleur sous la forme d'un dispositif suivant l'une des revendications 1 à 5.

7. Modèle de pile à combustible ou d'empilement de piles à combustible sous la forme d'un dispositif suivant l'une des revendications 1 à 5.

8. Procédé de production et de simulation d'écoulement à deux phases dans un réacteur électro-chimique ou chimique,
**caractérisé par** les stades :
on envoie une solution dégageant du gaz dans un dispositif suivant l'une des revendications 1 à 5 ou dans un modèle d'échangeur de chaleur suivant la revendication 6 ou dans un modèle de pile à combustible ou d'empilement de piles à combustible suivant la revendication 7,
on produit l'écoulement à deux phases et on en prend note.

9. Procédé suivant la revendication 8,
**caractérisé par** du H₂O₂ dilué comme solution dégageant du gaz.

10. Procédé suivant la revendication 8 ou 9,
**caractérisé par** une concentration de H₂O₂ de 0,5 à 30 % et notamment de 2 à 5 %.

## Claims

1. Device for simulating a two-phase flow, the device being at least partly transparent and comprising distributor structures for liquids and gases for generating the two-phase flow,
**characterised by** at least one catalyst for generating gas from a gas liberating solution.

2. Device according to claim 1,
**characterised in that** it is made at least partly from Plexiglas.

3. Device according to either of the preceding claims,
**characterised by** distributor structures in the form of manifolds and channels and cross-pieces.

4. Device according to either of claims 1 and 2,
**characterised by** distributor structures in the form of serpentines or small feet on a network or holes in metal contact sheets.

5. Device according to any of the preceding claims,
**characterised by** platinum/ruthenium as the catalyst.

6. A heat-exchanger model as the device according to any of claims 1 to 5.

7. A fuel cell model or fuel cell stack model as the device according to any of claims 1 to 5.

8. Process for generating and simulating two-phase flows in an electrochemical or chemical reactor,
**characterised by** the following steps:
- a gas liberating solution is piped into a device according to any of claims 1 to 5, or into a heat-exchanger model according to claim 6, or into a fuel cell model or fuel cell stack model according to claim 7,
- the two-phase flow is generated and recorded.

9. Process according to claim 8,
**characterised by** dilute H₂O₂ as the gas liberating solution.

10. Process according to claim 8 or 9,
**characterised by** an H₂O₂ concentration of 0.5 to 30%, more particularly 2 to 5%.
